# EUROPÄISCHE PATENTSCHRIFT

(11) **EP 0 417 654 B1**
(45) Veröffentlichungstag und Bekanntmachung des Hinweises auf die Patenterteilung: **18.11.1993**
(21) Anmeldenummer: 90117252.8
(22) Anmeldetag: 07.09.1990
(51) Int. Cl.: B60R 19/02

(54) **Anordung von Formteilen wie Stossfänger oder deren Verkleidungen bei Kraftfahrzeugen**
Assembly of mouldings as bumpers or covering thereof for automobiles
Disposition de préformés tels que pare-chocs ou leurs revêtements sur des automobiles

(30) Priorität: 12.09.1989 DE 3930430
(43) Veröffentlichungstag der Anmeldung: 20.03.1991
(73) Patentinhaber: Dynamit Nobel Aktiengesellschaft, 53839 Troisdorf (DE)
(72) Erfinder: Kamm, Artur, D-8830 Treuchtlingen (DE); Schmidt, Otto, D-6090 Rüsselsheim (DE); Schütt, Karl-Peter, D-6090 Rüsselsheim (DE); Waltemade, Udo, D-6090 Rüsselsheim (DE)

(56) Entgegenhaltungen:
- DE-A- 2 405 562
- DE-A- 2 550 019
- DE-A- 3 740 787
- DE-B- 2 724 425

## Beschreibung

Die Erfindung bezieht sich auf die Anordnung von Formteilen wie Stoßfänger oder deren Verkleidungen bei Kraftfahrzeugen entsprechend dem Oberbegriff des Anspruchs 1 (siehe zum Beispiel DE-B-2 724 425 und DE-A-2405562).

Es ist bekannt, bei Kraftfahrzeugen, insbesondere Personenkraftwagen, die Karosserie im Bereich der Front-, Heck- und/oder Seitenfläche für die Anordnung des Stoßfängers bzw. dessen Verkleidung mit einer Verprägung zu versehen, um den Stoßfänger, insbesondere jedoch dessen Verkleidung, sozusagen mehr oder weniger integriert in die Karosserie anzuordnen. Dazu ist die Karosserie im Bereich dieser Formteile mehr oder weniger tief "eingezogen", wobei zwischen dem oberen Teil der Karosseriewandung und dem eingezogenen Teil der Wandung eine im allgemeinen geringfügig geneigte Absatzfläche vorhanden ist. Zwischen der Oberkante des Formteils und dem Karosserieblech bzw. der Absatzfläche muß bei jedem Fahrzeug eine Abstandsfuge von z.B. 10 bis 15 mm festgelegt werden, damit bei Relativbewegungen des Formteiles die Lackierung nicht beschädigt wird.

Soll diese Fuge sehr eng, zum Beispiel nur 1 bis 2 mm sein, so müssen besondere Vorkehrungen getroffen werden. Bekannt ist hierzu z.B. das Kleben von Lackschutzfolie, meist in Überkopfarbeit. Auch weiche Dichtungsprofile können auf das Formteil aufgesteckt werden, wobei noch zusätzliche Maßnahmen erforderlich sind, um eine gerade Oberkante zu gewährleisten.

Da jede Karosserie Fertigungstoleranzen hat, ist auch die Fugenbreite einer entsprechenden Toleranz unterworfen. Folglich ist die Fugenbreite nicht nur von Fahrzeug zu Fahrzeug variabel, sondern auch über die Länge des Formteiles selbst.

Der Erfindung liegt die Aufgabe zugrunde, bei einer Anordnung von Formteilen gemäß dem Oberbegriff des Anspruchs 1 einen konstruktiv festgelegten engen Fugenspalt bei einfacher Montage und dem Ausschluß von Lackbeschädigungen zuverlässig einzuhalten.

Diese Aufgabe wird durch die Ausbildung entsprechend dem Kennzeichen des Anspruchs 1 gelöst. Die erfindungsgemäße Führungsschiene ist aus Kunststoff wie z.B. Polycarbonat, Polyamid oder Polyester, vorzugsweise durch Spritzgießen, hergestellt. Ihr an der Absatzfläche anliegender flanschförmiger Steg gewährleistet die definierte sehr geringe Fugenbreite und gleichzeitig die Vermeidung von Lackschäden. Es entfallen damit weiterhin besondere Einstellarbeiten während der Montage, unparallele Fugenverläufe oder Welligkeiten der oberen Kante des Formteiles durch Fertigungsverzug. Da das Formteil mit seiner streifenförmigen Verlängerung mit Schiebesitz in den Längsschlitz der Führungsschiene eingesteckt ist, ist damit gleichzeitig der spannungsfreie Ausgleich von Maßabweichungen infolge von Fertigungstoleranzen oder Wärmeausdehnungen gewährleistet.

Sofern es sich bei dem Formteil z.B. um die Verkleidung für den vorderen Stoßfänger eines Fahrzeuges handelt, kann vorgesehen werden, die Verkleidung in ihrem mittleren Bereich in konventioneller Weise an der Karosserie zu befestigen und im Bereich der beiden Seitenschenkel je eine Führungsschiene in einer entsprechenden Verprägung der Karosserie anzuordnen und in dieser die Schenkel der Verkleidung verschiebbar zu halten.

In vorteilhafter Ausgestaltung der Erfindung ist jedoch eine Befestigung entsprechend dem Anspruch 2 vorgesehen. Diese eignet sich insbesondere für einen am Heck des Fahrzeuges anzuordnenden Stoßfänger, kann aber selbstverständlich auch z.B. bei einem vorderen Stoßfänger vorgesehen werden. Dabei erstreckt sich die Führungsschiene bevorzugt über die gesamte Breite der Heckpartie und die sich daran anschließenden Seitenschenkel. Zum Ausgleich von Fertigungstoleranzen ist die Schiene dabei bevorzugt geteilt ausgeführt. Anstelle der wenigstens einen z.B. in der Mitte der langgestreckten Führungsschiene vorgesehenen taschenförmigen Erweiterung können z.B. auch zwei symmetrisch zur Mitte und im geringen Abstand davon ausgebildete Erweiterungen vorgesehen werden. Mit dieser einfachen und montagefreundlichen Befestigung des Formteils wird dessen "schwimmende" Lagerung sichergestellt, so daß auch z.B. bei extremen Temperaturbelastungen kein Verzug auftritt.

Die Festigkeit der vorgenannten Verbindung kann durch eine Ausbildung entsprechend den Ansprüchen 3 und 4 noch weiter erhöht werden. Die Ausbildung der Führungsschiene selbst und deren vorteilhafte Ausgestaltungen sind in den Ansprüchen 5 bis 7 angegeben.

Die Erfindung ist der Zeichnung in einem Ausführungsbeispiel schematisch gezeigt und wird anhand dieses nachstehend noch näher erläutert. Es zeigen:
- Figur 1: die Verkleidung eines Heckstoßfängers in perspektivischer Darstellung,
- Figur 2: einen Ausschnitt gemäß der Linie A-A in Figur 1 mit einem Teil der Karosseriewand und
- Figur 3: einen Ausschnitt analog Figur 2 entsprechend der Linie B-B in Figur 1.

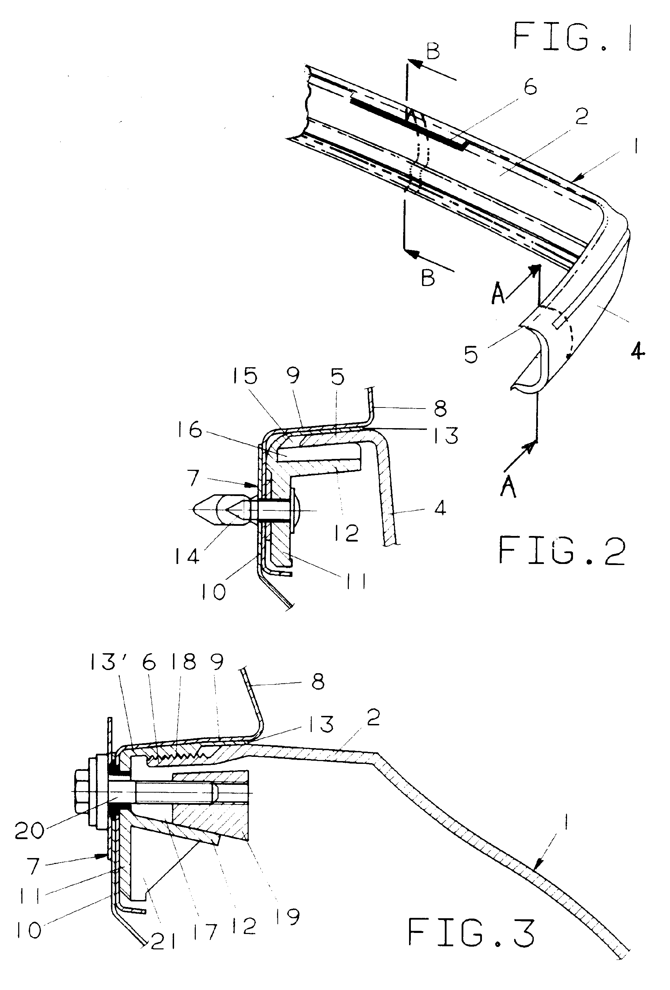

Das in Figur 1 gezeigte Formteil 1, die Verkleidung eines Heckstoßfängers, weist den mittleren, sich über die Breite des Fahrzeuges erstreckenden Bereich 2 und die beiden Seitenschenkel 3 und 4 auf (Seitenschenkel 3 ist nicht gezeicht). An der Oberkante des Formteils 1 ist die streifenförmige Verlängerung 5 vorgesehen. Der mittlere Bereich 2 weist zusätzlich noch in mittiger Anordnung an der streifenförmigen Verlängerung 5 den laschenförmigen Ansatz 6 auf. Das Formteil 1 ist in bekannter Weise z.B. durch Spritzgießen aus Polypropylen hergestellt.

In Figur 2 ist die Verprägung 7 der Karosseriewand im Bereich des Seitenschenkels zu erkennen, bei welcher die obere Karosseriewand 8 über die aus fertigungstechnischen Gründen geringfügig geneigte Absatzfläche 9 in den vertikalen Wandabschnitt 10 der Karosserie übergeht. Die Führungsschiene 11 weist an ihrem oberen, der Absatzfläche 9 zugekehrten Ende die beiden über die Länge der Schiene verlaufenden Stege 12 und 13 auf, zwischen denen der Längsschlitz 15 ausgebildet ist, der nach außen, d.h. zu der von dem Wandabschnitt 10 abgewandten Seite hin offen ist. Die Führungsschiene 11 ist an der Karosseriewand 10 mittels des Dübels 14 in bekannter Weise gas- und wasserdicht derart befestigt, daß ihr "äußerer" Steg 13 dicht an der Absatzfläche 9 der Karosserie anliegt. In den Längsschlitz 15 ist die streifenförmige Verlängerung 5 des Formteils 1, von dem hier ein Teil des Seitenschenkels 4 zu sehen ist, mit Schiebesitz eingeschoben, wobei sich die Verlängerung 5 mit ihrer Unterseite an Distanzrippen 16 abstützt, die im Abstand über die Länge der Führungsschiene verteilt innerhalb des Schlitzes 15, mit dem Steg 12 verbunden, angeordnet sind. Die Verlängerung 5 des Seitenschenkels 4 füllt den Längsschlitz 15 nicht zur Gänze aus, um einen Freiraum für den Toleranzausgleich zu erhalten. Die Dicke des Steges 13 bestimmt dabei in definierter Weise den konstruktiv festgelegten engen Abstand zwischen der Verkleidung des Stoßfängers und der Karosserie und verhindert dabei gleichzeitig sicher Lackbeschädigungen bei Relativbewegungen der Verkleidung. Wie zu erkennen ist, wird damit ein weitgehendst konturgenauer Übergang von der Blech- zur Kunststoffgeometrie eines Fahrzeuges bei sehr enger Fugenbreite erreicht. Durch dieses integrierte Design ist ein sehr gutes Erscheinungsbild gewährleistet, insbesondere dann, wenn die Verkleidung die gleiche Farbe wie die Karosserie aufweist.

Zum Ausgleich von Toleranzen hinsichtlich der Karosserie und der Führungsschiene ist die letztere zum Beispiel dreiteilig ausgeführt, indem sie am Übergang von den Seitenschenkeln 3 und 4 zum mittleren Bereich 2 geteilt ist und diese Teile einzeln mittels der Dübel 14 an der Karosserie befestigt sind. Die Distanzrippen 16 sind beispielsweise in einem Abstand von 20 bis 100 mm vorgesehen. Die Einstecktiefe der Verlängerung 5 in den Längsschlitz 15 beträgt im Seitenschenkelbereich z.B. etwa 10 bis 20 mm.

Der in Figur 3 gezeigte Befestigungsbereich läßt im Vergleich zu Figur 2 deutlich die größere Tiefe der Verprägung 7 erkennen, die eine dementsprechend - in Fahrzeuglängsrichtung betrachtet - größere Breite der Absatzfläche 9 aufweist. Der Längsschlitz 15 der Führungsschiene 1 ist hier durch die taschenförmige Erweiterung 17 unterbrochen bzw. geht in diese über, die zwischen den Stegen 12 und 13 ausgebildet ist. Der Steg 13 bestimmt mit seinem von der Karosseriewand 10 abgewandten Ende wie in Figur 2 die Fugenbreite. In seinem inneren, der eigentlichen Führungsschiene 11 bzw. der Karosseriewand 10 zugewandten Bereich 13′, ist er mit größerer Dicke und mit der Querverzahnung 18 ausgebildet. An diesem Bereich liegt das Formteil 1 mit seiner laschenförmigen Verlängerung 6, die mit einer korrespondierenden Querverzahnung versehenen ist, an. In der Erweiterung 17 ist schließlich noch der Klemmkeil 19 eingesetzt, der mittels der Schraube 20 in seine endgültige Position gegen den Wandabschnitt 10 verschiebbar ist und dabei die Lasche 6 nebst Verlängerung 5 fest gegen den Steg 13 und die Absatzfläche 9 preßt. Der Keil 19 ist hier asymmetisch ausgebildet, könnte aber auch symmetrisch sein. Die Neigung der Anpreßflächen des Klemmkeiles 19 ist dabei auf die Neigung der korrespondierenden Gegenflächen des laschenförmigen Ansatzes 6 und des Steges 12 abgestimmt. Zur Erhöhung der Festigkeit sind zwischen dem Steg 12 und dem unteren Bereich der Führungsschiene 11 wiederum diskrete Stützrippen 21 vorgesehen. Die Breite der Tasche 17 beträgt z.B. 50 bis 150 mm. Statt einer solchen Tasche können aber z.B. auch zwei entsprechende Taschen vorgesehen werden, die im Abstand von etwa 50 bis 250 mm von der Mitte des Fahrzeuges an der Schiene 11 ausgebildet sind. Mit dieser einfach vor zunehmenden Befestigung der Verkleidung über Klemmkeile wird nach spannungsfreier Montage ein fester Sitz an der Karosserie gewährleistet und gleichzeitig der Ausgleich von Maßabweichungen infolge von Fertigungstoleranzen oder Wärmeausdehnungen erlaubt.

## Patentansprüche

1. Anordnung von Formteilen (1) wie Stoßfänger oder deren Verkleidungen bei Kraftfahrzeugen, insbesondere Personenkraftwagen, deren Karosserie an der Front-, Heck- und/oder Seitenfläche (2,3,4), mit einer eine Absatzfläche (9) aufweisenden Verprägung (7) versehen ist und bei der das Formteil (1) im Abstand von dieser Absatzfläche angeordnet an der Karosserie befestigt ist, **dadurch gekennzeichnet**, daß im Bereich der Verprägung (7) eine Führungsschiene (11) angeordnet ist, die an ihrer der Absatzfläche (9) zugewandten Seite einen von zwei sich gegenüberliegenden und über die Länge der Führungsschiene (11) verlaufenden Stegen (12, 13) gebildeten Längsschlitz (15) aufweist und derart an der Karosserie (10) befestigt ist, daß der äußere Steg (13) an der Absatzfläche (9) anliegt, und daß das Formteil (1) an seiner der Absatzfläche (9) zugewandten Seite in eine streifenförmige Verlängerung (5) übergeht und mit dieser in den Längsschlitz (15) eingeschoben und gehalten ist.

2. Anordnung nach Anspruch 1, **dadurch gekennzeichnet**, daß die Führungsschiene (11) gleichzeitig zur Befestigung des Formteils (1) dient, indem der Längsschlitz (15) wenigstens eine taschenförmige Erweiterung (17) mit vergrößertem Abstand der beiden Stege (12, 13) voneinander aufweist und die Verlängerung (5) des Formteils (1) mittels eines in die Erweiterung (17) und in Richtung auf die Karosserie (10) zu anziehbaren Klemmkeiles (19) gegen den äußeren Steg (13) und die Absatzfläche (9) anpreßbar ist.

3. Anordnung nach Anspruch 2, **dadurch gekennzeichnet**, daß im Bereich der taschenförmigen Erweiterung (17) die Stege (12, 13) der Führungschiene (11) entsprechend einer örtlich größeren Tiefe der Verprägung (7) verlängert sind und das Formteil (1) einen entsprechenden, laschenförmigen Ansatz (6) aufweist, mit dem es an den an der Absatzfläche (9) anliegenden Steg (13) anpreßbar ist.

4. Anordnung nach Anspruch 2 oder 3, **dadurch gekennzeichnet**, daß im Bereich der Erweiterung (17) die aneinander zur Anlage kommenden Flächen des Steges (13) der Führungsschiene (11) und der Verlängerung (5) bzw. des laschenförmigen Ansatzes (6) des Formteiles (1) formschlüssig, vorzugsweise mittels einer Querverzahnung (18), miteinander verbindbar sind.

5. Führungschiene für eine Anordnung nach Anspruch 2 oder 3, **dadurch gekennzeichnet**, daß sie an ihrer der Absatzfläche (9) der Verprägung (7) zuzukehrenden Seite einen von zwei gegenüberliegenden und über die Länge der Führungsschiene (11) verlaufenden Stegen (12, 13) gebildeten Längsschlitz (15) für die Aufnahme einer streifenförmigen Verlängerung (5) des Formnteils (1) aufweist und daß zur Befestigung des Formteils (1) der Längsschlitz (15) wenigstens eine taschenförmige Erweiterung (17) aufweist, in welcher das Formteil (1) mittels eines Klemmkeils (19) befestigbar ist.

6. Führungsschiene nach Anspruch 5, **dadurch gekennzeichnet**, daß sich die Erweiterung (17) - im Querschnitt betrachtet- von ihrem offenen zum geschlossenen Ende hin keilförmig verengt.

7. Führungsschiene nach Anspruch 5 oder 6, **dadurch gekennzeichnet**, daß im Bereich der Erweiterung zusätzliche Stützrippen (21) für die Abstützung des von der Absatzfläche (9) abgewandten Steges (12) an der Führungsschiene (11) vorgesehen sind.

## Claims

1. Arrangement of moulded parts (1) such as bumpers or coverings therefor in motor vehicles, in particular cars whose body is provided on the front, rear and/or side surfaces (2,3,4) with stamping (7) having a stepped surface (9) and at which the moulded part (1) is secured to the body at a distance from this stepped surface, **characterised in that** there is arranged in the region of the stamping (7) a guide rail (11) which has on its side facing the stepped surface (9) a longitudinal slot (15) formed by two webs (12,13) lying opposite one another and running along the length of the guide rail (11) and secured to the body (10) so that the outer web (13) adjoins the stepped surface (9) and the moulded part (1) at its side facing the stepped surface (9) undergoes transition into a flap-shaped extension (5) and is pushed into the longitudinal slot (15) and held therein by means of this extension.

2. Arrangement according to claim 1, **characterised in that** the guide rail (11) serves at the same time for securing of the moulded part (1) by the longitudinal slot (15) having at least a pocket shaped enlargement (17) with increased separation of the two webs (12,13) from one another and by the extension (5) of the moulded part (1) being pressable against the outer web (13) and the stepped surface (9) by means of a clamping wedge (19) to be tightenable in the enlargement (17) and in the direction onto the body (10).

3. Arrangement according to claim 2, **characterised in that,** in the region of the pocket-shaped enlargement (17), the webs (12,13) of the guide rail (11) are extended corresponding to a locally enlarged depth of the stamping (7) and the shaped part (1) has a corresponding tongue-shaped lengthening (6) with which it can be pressed onto the web (13) adjoining the stepped surface (9).

4. Arrangement according to claim 2 or 3, **characterised in** **that** in the region of the enlargement (17), the surfaces becoming located on one another of the web (13) of the guide rail (11) and of the extension (5) or of the tongue-shaped lengthening (6) of the moulded part (1) are connectable to one another form-fittingly, preferably by means of transverse toothing (18).

5. Guide rail for an arrangement according to claim 2 or 3, **characterised in that** it has on its side turned towards the stepped surface (9) of the stamping (7) a longitudinal slot (15) formed from two webs (12,13) lying opposite one another and extending over the length of the guide rail (11) which is for the receipt of a flap-shaped extension (5) of the moulded part (5) and that, for securing of the moulded part (1) to the longitudinal slot (15), it has at least one pocket-shaped enlargement (17) in which the moulded part (1) is securable by means of a clamping wedge (19).

6. Guide rail according to claim 5, **characterised in that** the enlargement (17) - seen in cross-section - narrows in the shape of a wedge from its open to its closed end.

7. Guide rail according to claim 5 or 6, **characterised in** **that** there are provided in the region of the enlargement additional support ribs (21) for the supporting of the web (12) facing away from the stepped surface (9) on the guide rail (11).

## Revendications

1. Structure d'éléments préformés (1) tels que des pare-chocs ou leur habillage pour véhicules automobiles, notamment des véhicules particuliers, dont la carrosserie comporte à l'avant, à l'arrière et/ou sur le côté (2, 3, 4) une partie emboutie (7) avec une surface (9) rentrante, structure dans laquelle l'élément préformé (1) est fixé sur la carrosserie à distance de ladite surface rentrante, caractérisée par le fait qu'un rail de guidage (11) est disposé dans la région de la partie emboutie (7), lequel rail, sur sa face tournée vers la surface rentrante (9), présente une fente longitudinale (15) formée par deux nervures (12, 13) en vis-à-vis qui s'étendent sur toute la longueur de rail (11) et est fixé sur la carrosserie (10) de manière telle que la nervure (13) extérieure soit appliquée sur la surface rentrante (9) et par le fait que l'élément préformé (1), sur sa face tournée vers la surface rentrante (9), comporte un prolongement (5) en forme de bande et pénètre et est maintenu par celui-ci dans la fente longitudinale (15).

2. Structure selon la revendication 1, caractérisée par le fait que le rail de guidage (11) sert simultanément à la fixation de l'élément préformé (1), la fente longitudinale (15) comportant au moins une partie élargie (17) en forme de poche dans laquelle la distance entre les nervures (12, 13) est augmentée et le prolongement (5) de l'élément préformé (1) étant appliqué avec pression contre la nervure (13) extérieure et la surface rentrante (9) au moyen d'un coin de serrage (19) qui est serré dans la partie élargie (17), dans la direction de la carrosserie (10).

3. Structure selon la revendication 2, caractérisée par le fait que, dans la région de la partie élargie (17) en forme de poche, les nervures (12, 13) du rail de guidage (11) sont prolongées d'une valeur correspondant à une augmentation locale de la profondeur de la partie emboutie (7) et l'élément préformé (1) comporte une partie (6) adaptée en forme de patte par laquelle il est pressé contre la nervure (13) appliquée contre la surface rentrante (9).

4. Structure selon la revendication 2 ou 3, caractérisée par le fait que, dans la région de la partie élargie (17), les surfaces de la nervure (13) du rail (11) et du prolongement (5) ou de la partie (6) en forme de patte de l'élément préformé (1) en contact sont reliées entre elles par complémentarité de forme, de préférence au moyen de dents transversales (18).

5. Rail pour une structure selon la revendication 2 ou 3, caractérisé par le fait que celui-ci, sur sa face tournée vers la surface rentrante (9) de la partie emboutie (7), comporte une fente longitudinale (15) destinée à recevoir un prolongement en forme de bande, formée par deux nervures (12, 13) en vis-à-vis qui s'étendent sur toute la longueur du rail (11) et par le fait que, pour fixer l'élément préformé (1), la fente longitudinale (15) comporte au moins une partie élargie (17) en forme de poche dans laquelle l'élément préformé (1) est fixé à l'aide d'un coin de serrage (19).

6. Rail de guidage selon la revendication 5, caractérisé par le fait que la partie élargie (17) - vue en section droite - se rétrécit en forme de coin de son extrémité ouverte vers son extrémité fermée.

7. Rail de guidage selon revendication 5 ou 6, caractérisé par le fait qu'il est prévu, dans la région de la partie élargie, des nervures de renfort (21) supplémentaires pour soutenir la nervure (12) éloignée de surface rentrante (9) sur le rail de guidage (11).
